# EUROPEAN PATENT APPLICATION

(11) **EP 4 727 252 A1**
(43) Date of publication of application: **15.04.2026**
(21) Application number: 24819557.0
(22) Date of filing: 04.06.2024
(51) Int. Cl.: H04W 74/0816, H04W 74/00, H04L 5/00, H04W 84/12, H04W 74/0808, H04W 74/08

(54) **METHOD AND DEVICE FOR SECONDARY CHANNEL ACCESS IN WIRELESS LAN SYSTEM**

(30) Priority: 09.06.2023 KR 20230074387; 03.07.2023 KR 20230086044
(71) Applicant: LG Electronics Inc., Yeongdeungpo-gu Seoul 07336 (KR)
(72) Inventor: JANG, Insun, Seoul 06772 (KR); CHOI, Jinsoo, Seoul 06772 (KR); BAEK, Sunhee, Seoul 06772 (KR); KIM, Geonhwan, Seoul 06772 (KR); YOON, Yelin, Seoul 06772 (KR); CHA, Dongju, Seoul 06772 (KR)
(74) Representative: Jung, Minkyu
(86) International application number: PCT/KR2024/007640
(87) International publication number: WO 2024/253406

(57) **Abstract**

A method and a device for operating in a wireless LAN system are disclosed. The method performed by a first station (STA) in a wireless LAN system, according to one embodiment of the present disclosure, may comprise the steps of: receiving, from a second STA, a first frame including information related to channel access for one or more non-primary channels; performing a first back-off procedure in a first non-primary channel from among the one or more non-primary channels on the basis of the first frame; and, on the basis of the first frame and the first back-off procedure, transmitting a second frame to the second STA or receiving the second frame from the second STA in one or more channels including the first non-primary channel.

## Description

### [Technical Field]

The present disclosure relates to a method and device for secondary channel access in a wireless local area network (WLAN) system.

### [Background]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device for secondary channel access in a wireless LAN system.

The technical problem of the present disclosure is to provide a method and device for announcing information related to access to one or more secondary channels other than a primary channel in a wireless LAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless LAN system according to one aspect of the present disclosure may include receiving, from a second STA, a first frame including information related to channel access for at least one non-primary channel; performing a first back-off procedure on a first non-primary channel among the at least one non-primary channel based on the first frame; and transmitting a second frame to the second STA or receiving the second frame from the second STA on at least one channel including the first non-primary channel, based on the first frame and the first back-off procedure.

According to one embodiment of the present disclosure, a method performed by the second station (STA) in the wireless LAN system may include transmitting, to a first STA, a first frame including information related to channel access for at least one non-primary channel; and based on a first back-off procedure being performed on a first non-primary channel among the at least one non-primary channel based on the first frame, receiving a second frame to the first STA or transmitting the second frame to the first STA on at least one channel including the first non-primary channel, and the first back-off procedure may be performed while the primary channel is in a busy state.

### [Technical Effects]

According to various embodiments of the present disclosure, a method and device for accessing a secondary channel in a wireless LAN system may be provided.

According to various embodiments of the present disclosure, a method and device for announcing information related to accessing one or more secondary channels other than a primary channel in a wireless LAN system may be provided.

According to various embodiments of the present disclosure, communication can be performed more efficiently using media and channels in a wireless LAN system.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram illustrating an example of primary channel-based channel access to which the present disclosure can be applied.
FIG. 9 is a flowchart illustrating a method for a first STA to perform channel access according to an embodiment of the present disclosure.
FIG. 10 is a flowchart illustrating a method for a second STA to perform channel access according to an embodiment of the present disclosure.
FIG. 11 is a diagram illustrating an example of secondary channel access according to the present disclosure.
FIG. 12 is a diagram illustrating a case where BSS channels between APs overlap according to an embodiment of the present disclosure.
FIG. 13 is a diagram illustrating a process for an AP to transmit announcement information related to SCA according to an embodiment of the present disclosure.
FIG. 14 is a diagram illustrating a case where the bandwidth of the BSS operating channel is 160 MHz according to an embodiment of the present disclosure.
FIG. 15 is a diagram illustrating a case where the bandwidth of the BSS operating channel is 320 MHz according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

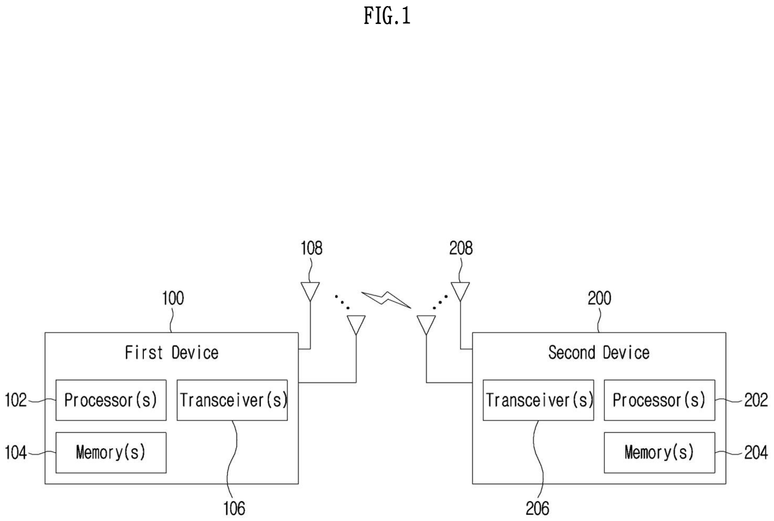

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

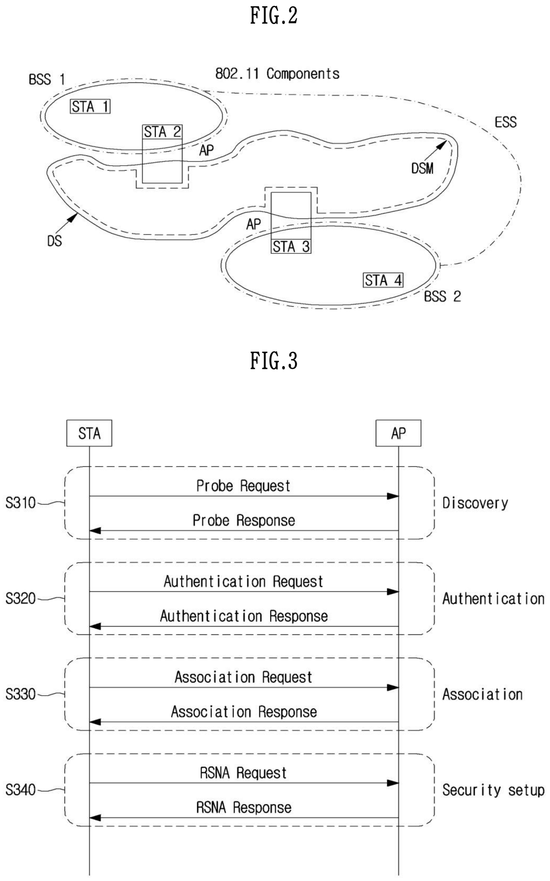

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

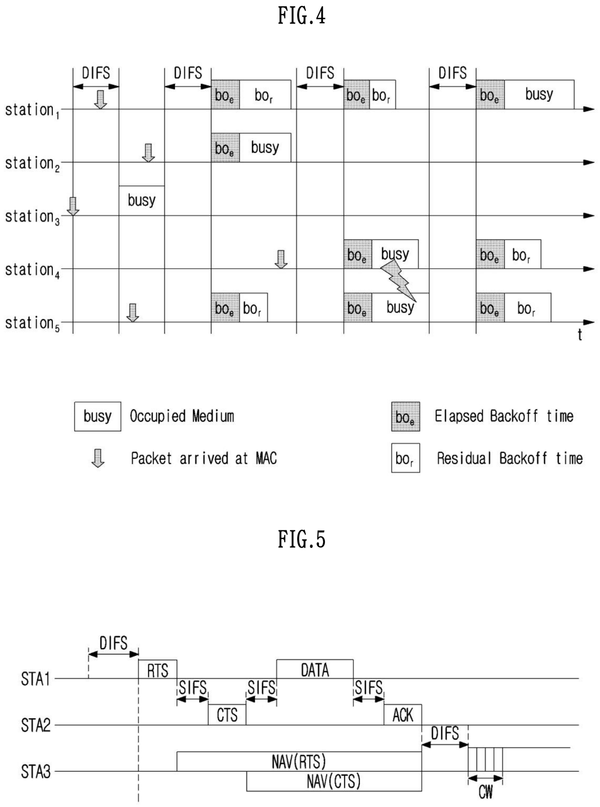

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

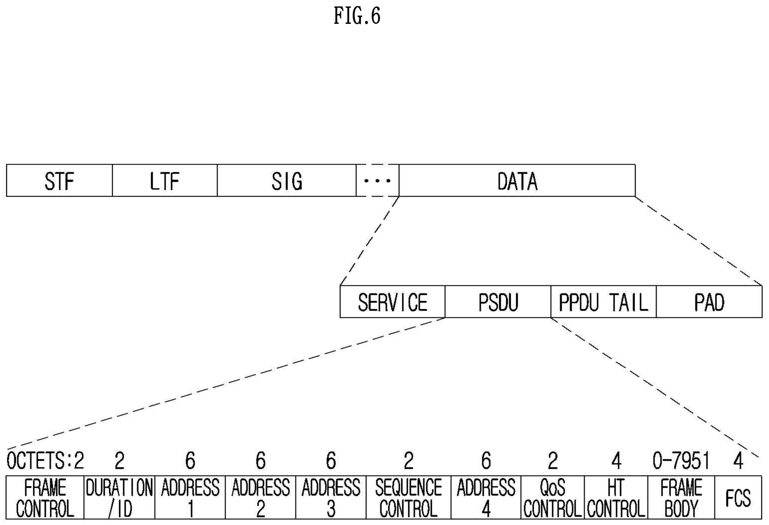

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

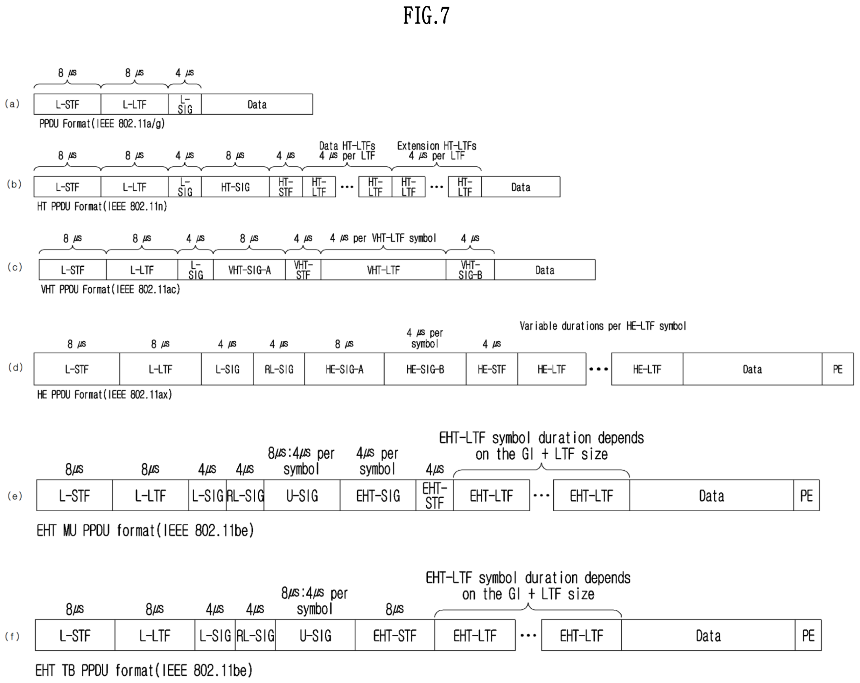

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Primary channel-based channel access

Channel access in a wireless LAN system is performed based on the primary channel. For example, if the primary channel is idle and the backoff counter (BC) expires, an STA can transmit frames on a channel that includes the primary channel and an idle secondary channel. To this end, all STAs preferentially perform CCA on the primary channel. In addition, the AP announces information about the primary channel of the BSS, and the primary channel is always included in the channel through which management frames (e.g., beacon frames, probe response frames, etc.) are transmitted.

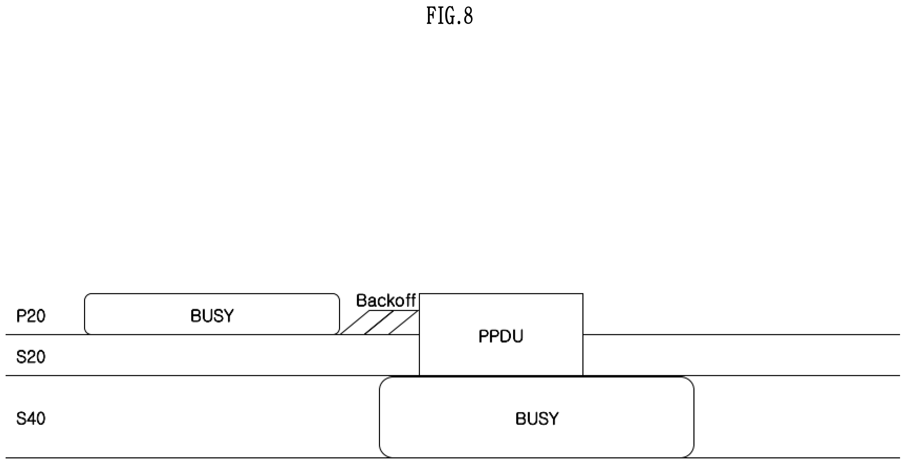

FIG. 8 is a diagram illustrating an example of primary channel-based channel access to which the present disclosure can be applied.

The example of Fig. 8 illustrates an example of primary channel-based channel access in an 80 MHz bandwidth. Referring to Fig. 8, channels in an 80 MHz bandwidth may be referred to as follows.
P20: Primary 20MHz channel
S20: Secondary 20MHz channel (if the bandwidth is 40MHz, it corresponds to the remaining 20MHz secondary channels excluding P20)
S40: Secondary 40MHz channel (if the bandwidth is 80MHz, it corresponds to the remaining 40MHz secondary channels excluding P20 and S20)

Similarly, channels with bandwidths exceeding 80MHz may be referred to as follows.
S80: Secondary 80MHz channel (if the bandwidth is 160MHz, corresponds to the remaining 80MHz secondary channels, excluding P20, S20, and S40)
S160: Secondary 160MHz channel (if the bandwidth is 320MHz, corresponds to the remaining 160MHz secondary channels, excluding P20, S20, S40, and S80)
S320: Secondary 320MHz channel (if the bandwidth is 640MHz, corresponds to the remaining 320MHz secondary channels, excluding P20, S20, S40, S80, and S160)

In a conventional wireless LAN system, a backoff counter is set for the primary channel. For example, an STA can perform a CCA (e.g., physical CS and virtual CS) to determine whether the state of the medium on the primary channel is idle or busy. For example, in the example of FIG. 8, if the state of the medium on P20 is determined to be busy based on a CCA (e.g., physical CS and/or virtual CS (NAV)) for P20, the STA does not decrement the backoff counter (BC), but if the state of the medium on P20 is determined to be idle, the STA can decrement the BC. Through this backoff process, when the BC expires (i.e., when the value of the BC becomes 0), the STA can check (e.g., perform a CCA) the state of the medium on S20 and S40. The STA can transmit a PPDU (or frame) on the channel that is idle among S20 and S40, and on the primary channel. (In the example of Figure 8, when the BC for P20 expires, S40 is busy and S20 is idle, so 40MHz PPDU can be transmitted on P20 and S20.

### Secondary channel-based channel access

The aforementioned primary channel-based channel access operation can have the effect of preventing interference and protecting PPDU transmission, since frame exchange between all STAs and APs is performed according to the state of the primary channel. On the other hand, if only the primary channel is busy and the secondary channel(s) are idle, channel access cannot be performed only on the secondary channel(s) excluding the primary channel, resulting in inefficiency from a medium usage perspective. For example, in the example of FIG. 8, if P20 is busy and both S20 and S40 are idle, a portion of the bandwidth corresponding to 60 MHz is wasted.

In order to improve the wireless LAN system, a new method of accessing the secondary channel based on the secondary channel is required even when the primary channel is not in an idle state.

Hereinafter, various examples of the present disclosure for secondary channel access are described.

In describing the present disclosure, secondary channel access (SCA) means that an STA accesses a secondary channel (i.e., a medium on the secondary channel) while the primary channel (i.e., a medium on the primary channel) is BUSY (e.g., due to OBSS traffic or other circumstances). Here, an AP or non-AP STA may determine that the primary channel is BUSY based on physical carrier sensing and/or virtual carrier sensing and/or NAV settings, etc.

In the present disclosure, for the convenience of explanation, the term "secondary channel" is used to collectively refer to one or more channels other than the primary channel. However, the present disclosure is not limited thereto, and may also be referred to as a non-primary channel. In addition, the secondary channel access may be referred to as a non-primary channel access (NPCA).

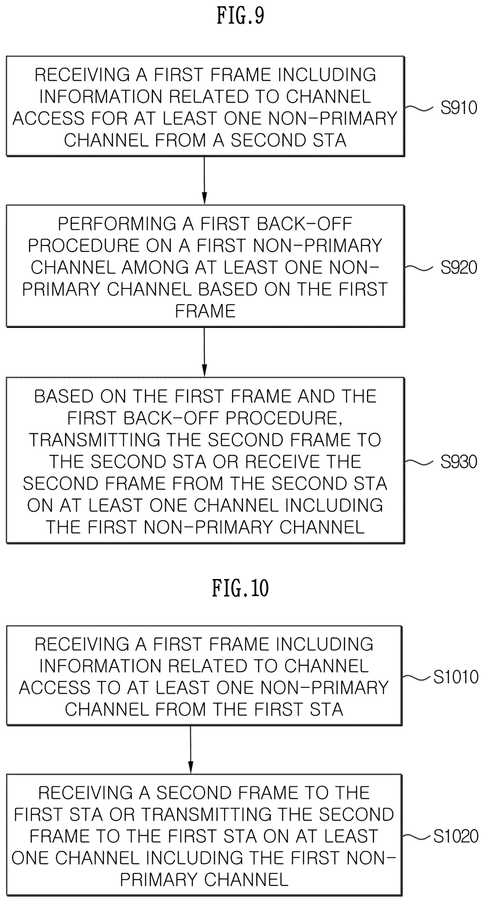

FIG. 9 is a flowchart illustrating a method for a first STA to perform channel access according to an embodiment of the present disclosure. In describing FIGS. 9 and 10 , each of the first STA and the second STA may be implemented as either a non-AP STA or an AP. Furthermore, a non-primary channel may collectively refer to a channel other than a primary channel (e.g., a secondary channel).

A first STA may receive a first frame including information related to channel access for at least one non-primary channel from a second STA (S910).

Specifically, the first STA may receive, from the second STA, a first frame that announces information related to channel access for at least one non-primary channel. Here, the first frame may include, but is not limited to, a management frame (e.g., a beacon frame or a probe response frame).

As an example of the present disclosure, information related to access to at least one non-primary channel may include at least one of information indicating whether channel access to the non-primary channel is allowed, a maximum bandwidth for transmitting or receiving a second frame (i.e., a frame that can be transmitted through channel access to the non-primary channel), a clear channel assessment (CCA) threshold for determining whether the state of the non-primary channel (e.g., the first non-primary channel and/or the second non-primary channel) is idle, a bitmap indicating the first non-primary channel on which a first back-off procedure (i.e., a back-off procedure performed on the non-primary channel) is performed, information indicating a size of the bitmap, or information on a unit bandwidth for dividing the entire bandwidth of a basic service set (BSS) operating channel into one or more subsets.

For example, each bit constituting the bitmap may be associated with information indicating whether each channel of a unit bandwidth (e.g., 20 MHz) is a channel on which the first back-off procedure is to be performed. That is, a specific bit of the bitmap may indicate whether the unit bandwidth channel corresponding to the specific bit is a channel on which the first back-off procedure is to be performed.

Additionally, the order of each bit of the bitmap may be related to the order of each unit bandwidth channel. That is, the order of the unit bandwidth channels corresponding to each bit of the bitmap may be sorted in ascending or descending order. For example, the first bit of the bitmap may correspond to the unit bandwidth channel having the highest frequency or the unit bandwidth channel having the lowest frequency, and the last bit of the bitmap may correspond to the unit bandwidth channel having the lowest frequency or the unit bandwidth channel having the highest frequency.

For example, if information indicating that channel access to a non-primary channel is not allowed is received from a second STA, and the primary state is busy, the first STA may not perform access to the non-primary channel that is in an idle state. In the following, it is assumed that the first STA receives information indicating that channel access to a non-primary channel is allowed from a second STA.

The first STA may perform a first back-off procedure on a first non-primary channel among at least one non-primary channel based on the first frame (S920). That is, when the primary channel is busy, the first STA may perform a channel access procedure for the non-primary channel based on the first frame received from the second STA. At this time, the first non-primary channel (i.e., the reference non-primary channel) on which the first STA performs the first back-off procedure may be indicated through the first frame.

For example, based on the back-off count value according to the first back-off procedure being 0, the first STA may determine whether the state of the second non-primary channel adjacent to the first non-primary channel is idle. That is, the first STA may determine whether the state of the second non-primary channel is idle or busy by performing the first type or/and the second type of CCA.

Based on the first frame and the first back-off procedure, the first STA may transmit the second frame/PPDU to the second STA or receive the second frame/PPDU from the second STA on at least one channel including the first non-primary channel (S930).

For example, based on the state of the second non-primary channel being idle, the first STA may transmit a second frame/PPDU to the second STA or receive a second frame/PPDU from the second STA on at least one channel including the first non-primary channel and the second non-primary channel. Here, the bandwidth of at least one channel on which the second frame is transmitted or received may be set/determined to be less than or equal to the maximum bandwidth indicated/set by the first frame.

And, based on the primary channel status, the first STA may transmit the second frame with the primary channel punctured to the second STA or receive the second frame from the second STA. The transmission opportunity (TXOP) for transmitting or receiving the second frame can end before the time when the network allocation vector (NAV) set in the primary channel expires.

The method described in the example of FIG. 9 may be performed by the first device (100) of FIG. 1. For example, one or more processors (102) of the first device (100) of FIG. 1 may receive a first frame including information related to channel access for at least one non-primary channel from a second STA via one or more transceivers (106). The one or more processors (102) may perform a first back-off procedure on a first non-primary channel among the at least one non-primary channel based on the first frame. The one or more processors (102) may transmit a second frame to the second STA via one or more transceivers (106) on at least one channel including the first non-primary channel, or may receive the second frame from the second STA via one or more transceivers (106), based on the first frame and the first back-off procedure.

Furthermore, one or more memories (104) of the first device (100) may store commands for performing the method described in the example of FIG. 9 or the examples described below when executed by one or more processors (102).

FIG. 10 is a flowchart illustrating a method for a second STA to perform channel access according to one embodiment of the present disclosure.

The second STA may receive a first frame including information related to channel access to at least one non-primary channel from the first STA (S1010). That is, the second STA may transmit the first frame including information related to an access procedure for a non-primary channel to the first STA when the state of the primary channel is busy. Since the information related to channel access to at least one non-primary channel has been described with reference to FIG. 9, a redundant description will be omitted.

Based on a first back-off procedure being performed on a first non-primary channel among at least one non-primary channel based on a first frame, the second STA may receive a second frame to the first STA or transmit the second frame to the first STA on at least one channel including the first non-primary channel (S1020). Here, the first back-off procedure may be performed while the primary channel is in a busy state.

The method described in the example of FIG. 10 may be performed by the second device (200) of FIG. 1. For example, one or more processors (202) of the second device (200) of FIG. 1 may transmit a first frame including information related to channel access for at least one non-primary channel to a first STA via one or more transceivers (206). Based on a first back-off procedure being performed on a first non-primary channel among at least one non-primary channel based on the first frame, the one or more processors (202) may receive a second frame to the first STA via one or more transceivers (206) on at least one channel including the first non-primary channel, or transmit the second frame to the first STA via one or more transceivers (206).

Furthermore, one or more memories (204) of the second device (200) may store commands for performing the method described in the example of FIG. 10 or the examples described below when executed by one or more processors (202).

The examples of FIGS. 9 and 10 may correspond to some of the various examples of the present disclosure. Below, various examples of the present disclosure, including the examples of FIGS. 9 and 10, will be described in more detail.

### Embodiment 1

This embodiment relates to the capability of an STA for secondary channel access.

Unlike the existing primary channel-based channel access that is basically supported by STAs, secondary channel access (SCA) can be performed by STAs having the capability for SCA (e.g., AP STAs and/or non-AP STAs). For example, AP STAs and non-AP STAs can inform each other about whether they support the SCA capability and/or whether the SCA capability is enabled.

The capability for SCA may be defined by whether Type 1 CCA can be performed based on whether a WLAN frame is decoded/identified on the secondary channel (i.e., whether a preamble defined by the WLAN system is detected in the frame of the received PPDU (PD)). For Type 1 CCA for the secondary channel, similar to the NAV setting/reset (for the primary channel) through PD-based CCA performed on the existing primary channel (i.e., NAV update based on duration information of the detected preamble), NAV setting/reset for the secondary channel can be applied based on duration information of the preamble detected through Type 1 CCA on the secondary channel.

In addition, the capability for SCA may be defined by whether a second type CCA based on guard interval detection (GID) or energy detection (ED) is performable on a secondary channel. GID may include determining whether a guard interval symbol defined by a wireless LAN system is detected, and ED may include determining whether a signal greater than or equal to an arbitrary strength is detected, regardless of whether it is a signal/packet defined by a wireless LAN system. In addition, different or independent detection thresholds (e.g., thresholds for received signal strength) may be defined for the first type CCA and the second type CCA.

Based on these various types of CCA, various levels of SCA capabilities can be defined.

SCA capability level 0 may correspond to a capability that does not perform backoff on the secondary channel. That is, as with conventional primary channel-based channel access, a second type of CCA (e.g., GID-based CCA and/or ED-based CCA) may be performed on the secondary channel.

SCA Capability Level 1 may correspond to a capability to perform backoff on one secondary channel simultaneously. If there is more than one secondary channel in the working channel, Type 1 CCA (e.g., PD-based CCA) may be performed on one secondary channel at a time, and Type 1 CCA/backoff on multiple secondary channels at a time may not be supported.

SCA Capability Level 2 may correspond to a capability capable of performing backoff on multiple secondary channels simultaneously. If there is one or more secondary channels within the operating channel, a first type CCA (e.g., PD-based CCA) may be performed on one or more of the secondary channels.

Such SCA capabilities may be included in capability information elements (e.g., UHR capability IE) for a specific version/generation of a wireless LAN system. For example, an AP may transmit a capability IE including information indicating whether SCA capability is supported in a beacon frame, a probe response frame, an association request frame, a reassociation request frame, etc. For example, an STA may transmit a capability IE including information indicating whether SCA capability is supported in a probe request frame, an association request frame, a reassociation request frame, etc.

### Embodiment 2

This embodiment relates to the operation process of secondary channel access.

For STAs, a basic NAV and an intra-BSS NAV may be set. The basic NAV may be updated based on a PPDU identified as inter-BSS, or based on a PPDU that cannot be identified as intra-BSS or inter-BSS. The intra-BSS NAV may be updated based on a PPDU identified as intra-BSS.

Specifically, the STA behavior when the NAV for the primary channel is running (i.e., the NAV is set/reset and has not expired) can be assumed as follows.

For example, when an AP performs frame exchange with a first STA associated with a BSS within a TXOP acquired by the AP, an intra-BSS NAV for a primary channel may be set/reset for second STA(s) within the BSS. In addition, it may be assumed that the second STA, for which the intra-BSS NAV for the primary channel is operating, accesses a secondary channel (e.g., on a secondary channel identified as idle) and transmits a frame to the AP. In this case, while the AP is performing a transmission (e.g., transmitting downlink data on the primary channel, transmitting an ACK for uplink data, etc.) within the TXOP, the AP may not receive a frame transmitted by the second STA to the AP on the secondary channel.

Considering this, it can be expected that the STA can successfully perform frame exchange on the SCA if the default NAV is set/reset by a PPDU related to a BSS other than its own BSS (e.g., an OBSS) on the primary channel, or by a PPDU that is not classified/identified as its own BSS or another BSS, and the STA performs the SCA while the default NAV for the primary channel is in operation. In other words, the STA can perform the SCA when the default NAV for the primary channel is set (or in operation).

### Embodiment 2-1

This embodiment relates to frame transmission on a secondary channel.

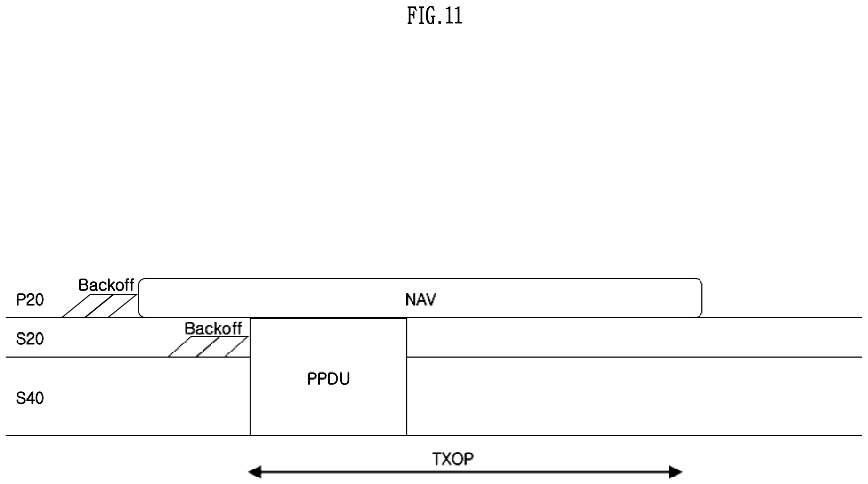

FIG. 11 is a diagram illustrating an example of secondary channel access according to the present disclosure.

In the case of the conventional primary channel-based channel access described with reference to FIG. 8, when backoff is performed at P20 and the backoff counter expires (i.e., the BC value becomes 0), a frame can be transmitted on P20 and one or more secondary channels in an idle state, depending on whether one or more secondary channels are idle/busy.

First, the STA ,au perform a backoff process on one or more secondary channels capable of performing backoff (referred to as "the first one or more secondary channels") when P20 is in a busy state.

In this regard, assuming that a backoff process based on a randomly selected backoff counter is not performed on the secondary channel, if a plurality of adjacent STAs having similar operating channels immediately perform frame transmission on a channel that is idle based on the CCA result for a short time interval (e.g., 1 slot) on a channel including (or overlapping) the secondary channel (without performing the backoff process), a situation may arise where a plurality of STAs transmit frames simultaneously, and the channel may be wasted due to this possibility of collision. Therefore, in order to improve channel utilization, a backoff process may be performed on the secondary channel.

In addition, if the remaining length of the NAV timer for the primary channel is less than a predetermined threshold, the STA may not perform secondary channel access (or backoff on the secondary channel). That is, if the remaining length of the NAV timer for the primary channel is greater than or equal to a predetermined threshold, secondary channel access (or backoff on the secondary channel) may be performed.

For example, such a predetermined threshold may be associated with the TXOP length on the secondary channel. For example, if the current remaining NAV timer for the primary channel is not enough time to acquire a TXOP on the secondary channel, the STA may not perform a backoff on the secondary channel.

Next, when the backoff counter on the first one or more secondary channels expires (i.e., the BC value becomes 0), the STA may perform a second type CCA on one or more additional secondary channels in addition to the first one or more secondary channels on which the backoff process was performed. For example, the STA may determine whether the result of the second type CCA on another secondary channel (i.e., the additional secondary channel) is idle or busy during a predetermined length of time (e.g., PIFS) before the time when the backoff counter on the first secondary channel on which the backoff process was performed becomes 0.

Accordingly, the STA may perform backoff to perform PPDU/frame transmission on the first one or more secondary channels for which the backoff counter has expired and the second one or more secondary channels corresponding to the additional secondary channels determined to be idle according to the second type CCA. If all secondary channels other than the first one or more secondary channels for which the backoff has been performed (i.e., the secondary channels for which the second type CCA is performed) are busy, the second one or more secondary channels may not include any secondary channels other than the secondary channels for which the backoff counter has expired.

For example, in the example of FIG. 11, S20 is a secondary channel on which a backoff process based on the first type CCA is performed, and a second type CCA may be performed on S40 without a backoff. When the backoff counter on S20 expires and both 20MHz channels of S40 are idle as a result of the second type CCA for a predetermined time period before that, a PPDU corresponding to 60MHz of S20 and S40, excluding P20, among the 80MHz bandwidth may be transmitted (i.e., the second one or more secondary channels include S20 and S40). In this case, the PPDU transmitted on the second one or more secondary channels may be a PPDU of the 80MHz bandwidth including information indicating that P20 is punctured, and a MAC frame transmitted by an STA that performed secondary channel access may be included in this punctured PPDU.

If the backoff counter for S20 expires and S40 is busy as a result of a second type CCA during a predetermined time interval before that, a PPDU corresponding to 20 MHz of S20 may be transmitted (i.e., the second one or more secondary channels include S20). In this case, the PPDU transmitted on the second one or more secondary channels may be a PPDU of 80 MHz bandwidth that includes information indicating that P20 and S40 are punctured, and the punctured PPDU may include a MAC frame transmitted by the STA that performed the secondary channel access.

Additionally, a PPDU/frame transmitted by an STA on one or more secondary channels may be transmitted to the AP or to another STA.

In the example of FIG. 11, the STA can set/reset the basic NAV based on a frame received while performing a backoff process on the primary channel. During the basic NAV operation for the primary channel, the STA can perform a backoff process on S20. The backoff on S20 can be performed via PD-based CCA, and a time delay due to a switching operation may occur between the PD-based CCA or backoff stop on the primary channel and the PD-based CCA or backoff start on the secondary channel. The CCA on S20 is not limited to PD-based CCA (i.e., type 1 CCA), and GID-based or ED-based CCA (i.e., type 2 CCA) can also be performed.

### Embodiment 2-2

This embodiment is for TXOP on a secondary channel.

Since a CCA must be performed for P20 when the default NAV for the primary channel expires, the termination point of the TXOP on the secondary channel may be before the expiration of the default NAV for the primary channel. Accordingly, the TXOP for the secondary channel may be acquired/set to end before the expiration of the default NAV for the primary channel.

If an STA acquires/sets a TXOP for a secondary channel to end after the default NAV for the primary channel expires, other STAs that do not support secondary channel access (e.g., legacy STAs, etc.) may transmit frames on the channel including the primary channel (i.e., the primary channel and the secondary channel) after the default NAV for the primary channel expires, and the STAs that perform secondary channel access may not receive frames transmitted by other STAs on the channel including the primary channel. In addition, if the target beacon transmission time (TBTT) is set at the time when the default NAV is running, the AP should prepare to transmit a beacon on the channel including the primary channel immediately after the default NAV expires, but may not be able to transmit the beacon in time due to the TXOP on the secondary channel, and other STAs may not receive the beacon that the AP will transmit at a scheduled time and may have to wait for the beacon for a longer period of time. Therefore, by setting the TXOP for the secondary channel to end before the primary NAV expires, frame exchange can be performed normally on the channel including the primary channel.

Additionally, the STA may not transmit a frame on the secondary channel or perform a backoff on the secondary channel if there is not enough time to set/acquire a TXOP on the secondary channel (e.g., when the default NAV expiration time for the primary channel is less than a predetermined threshold (related to the TXOP length)). For example, if the length of the time interval between the time when the backoff counter for the secondary channel expires and the time when the default NAV for the primary channel ends is not sufficient for frame exchange (or not sufficient to set/acquire a TXOP), the STA may not perform a frame transmission on the secondary channel.

Referring to the example of FIG. 11, an STA that wishes to acquire a TXOP through a backoff process on S20 and whose backoff counter has expired can set/acquire the TXOP so that its length is shorter than the remaining time of the basic NAV for the primary channel (i.e., so that the TXOP ends before the basic NAV ends).

### Embodiment 3

This embodiment relates to a transmission or reception operation of an STA performing secondary channel access.

An STA performing secondary channel access may transmit a frame/PPDU on the secondary channel during the time when the NAV for the primary channel is operating. For example, the STA may transmit a frame/PPDU on one or more idle secondary channels, excluding/puncturing some channels (e.g., the primary channel and (if any) busy secondary channel(s)), based on a backoff process performed on one or more first secondary channels and a CCA result of one or more additional secondary channels for which backoff has not been performed.

Additionally or alternatively, a TXOP for a secondary channel, which starts with a frame/PPDU transmission on the secondary channel, may be set to end before the NAV on the primary channel ends. The TXOP length may be set/indicated through duration information (e.g., a value of a Duration/ID field) of a frame transmitted or received by an STA performing secondary channel access. For example, the value of the Duration/ID field may be set to a value including a time required for the exchange of frame/PPDU(s) following the corresponding frame/PPDU (e.g., a length of the corresponding frame/PPDU(s) and an interframe gap (IFS)).

Additionally or alternatively, the EDCA parameter set for each (first) secondary channel on which backoff is performed at the transmitting STA may be set as the EDCA parameter set for the primary channel, the MU EDCA parameter set, or a new EDCA parameter set. This EDCA parameter set may be applied equally to all (first) secondary channels, or may be applied differently.

In the present disclosure, an STA receiving a frame transmitted via secondary channel access may perform frame detection on the secondary channel while the NAV is operating on the primary channel. For example, the STA may have a frame to transmit and perform backoff on the secondary channel, may receive a frame during the backoff on the secondary channel, or may attempt to receive a frame addressed to itself on the secondary channel even when there is no frame to transmit. In addition, the STA may perform NAV setting/resetting for the secondary channel based on duration information of a frame detected on the secondary channel.

Additionally or alternatively, the EDCA parameter set for each (first) secondary channel on which backoff is performed at the receiving STA may be set as the EDCA parameter set for the primary channel, the MU EDCA parameter set, or a new EDCA parameter set. This EDCA parameter set may be applied equally to all (first) secondary channels, or may be applied differently.

### Embodiment 4

Embodiment 4 relates to a procedure for an AP to announce information related to secondary channel access and information related to secondary access.

If the BSS operating channel of an AP (or AP MLD) overlaps with the BSS (i.e., OBSS) operating channel of a neighboring AP (i.e., a neighboring AP), SCA within the BSS of the AP and SCA within the BSS of the neighboring AP may affect each other. For example, if an AP successfully performs SCA within a BSS and transmits/receives PPDUs/frames using both secondary channels, and the secondary channel through which the AP transmits PPDUs/frames overlaps with the primary channel of another AP, the channel access opportunity of the other AP may be reduced.

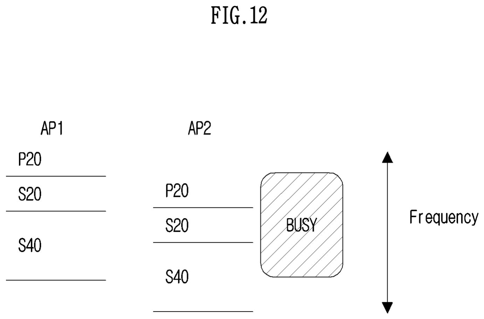

For example, assume that the STA of FIG. 11 is AP 1 of FIG. 12. Since S20 of AP 1 of FIG. 12 corresponds to P20 of AP 2 (i.e., S20 of AP 1 and P20 of AP 2 overlap each other), if AP 1 transmits PPDU/frames using all secondary channels, AP 2 may not be able to use P20 and S20. That is, if AP 1 performs SCA, a problem may arise in that AP 2 does not have an opportunity to perform PCH-based channel access.

In addition, if an AP has the capability for SCA but another AP does not have the capability for SCA, there is a problem that the longer the time that the AP with the capability for SCA occupies the channel, the less the opportunity for the other AP to access the channel may be.

Therefore, the AP can notify the STA of information related to the SCA operation so that the STA can use the SCH while considering the surrounding situation (e.g., whether another STA has the capability for SCA, the operating channel of the BSS to which the STA is connected, channel state information related to the STA, information related to the OBSS, etc.).

### Embodiment 4-1

Embodiment 4-1 relates to information related to SCA operation transmitted by an AP to an STA.

The AP may transmit various types of information related to the SCA operation to the STA through a management frame (e.g., a beacon frame, a probe response frame, etc.). For example, the management frame may include an UHR operation IE or an IE related to the SCA operation, and the UHR operation IE or the IE related to the SCA operation may include various types of information related to the SCA operation. The STA may perform an operation related to the SCA according to various types of information related to the SCA operation received from the AP.

As an example of the present disclosure, information related to SCA operation may include information on whether to allow SCA, a maximum value of bandwidth that can transmit a frame/PPDU on an SCH when SCA is performed, information on one or more secondary channels that serve as a reference for SCA (i.e., a channel on which backoff is to be performed), and/or CCA threshold information related to a secondary channel.

Specifically, information on whether to allow SCA can be indicated through a field related to whether to allow SCA (e.g., an SCA allowed field), but the name of the field can be changed. For example, assume that the SCA allowed field consists of 1 bit. In this case, if the SCA allowed field value is 1 (or 0), this may mean that SCA is allowed, and if the SCA allowed field value is 0 (or 1), this may mean that SCA is not allowed.

Additionally or alternatively, one of 20, 40, 80, 160, 320, and 640 MHz bandwidths may be indicated as the maximum value of the bandwidth over which a frame/PPDU can be transmitted on the SCH when the SCA is performed. The maximum value of the bandwidth over which an STA can transmit a frame/PPDU on the SCH may not be greater than the operating bandwidth of the BSS associated with the STA (or the bandwidth of the BSS operating channel). The operating bandwidth of the BSS (or the bandwidth of the BSS operating channel) may collectively refer to the bandwidth over which the BSS operates. As described above, the AP may transmit information about the maximum value of the bandwidth over which a frame/PPDU can be transmitted on the SCH to the STA via a management frame (e.g., a beacon frame or/and a probe response frame). Information about the maximum bandwidth that can transmit a frame/PPDU on the SCH can be indicated through the SCA Bandwidth field, but the name of that field may be changed.

For example, assume that the BSS operating bandwidth is 160 MHz and one or more SCHs of S80 are idle. In this case, if the maximum bandwidth announced by the AP (i.e., the maximum value of the bandwidth that can transmit frames/PPDUs on the SCH) is 80 MHz, frames in the form of 80 MHz PPDUs can be transmitted and received by the STA on the excluded channels.

Additionally or alternatively, information about one or more secondary channels that serve as a reference for SCA (i.e., channels on which backoff is to be performed) may indicate channels on which backoff is to be performed based on the BSS operating bandwidth or the maximum bandwidth that can transmit the frame/PPDU. For example, information about one or more secondary channels that serve as a basis for SCA may be configured through a bitmap.

For example, as illustrated in FIG. 11, if the total bandwidth (e.g., the bandwidth of the BSS operating channel) is 80 MHz and backoff is performed based on the first secondary channel, one or more secondary channels that serve as the basis for SCA may be configured with a 3-bit bitmap. Each bit constituting the 3-bit bitmap may correspond to each 20 MHz secondary channel. For example, the bitmap may be configured with "100" (i.e., the bitmap is configured to indicate that backoff is performed on the first 20 MHz secondary channel). However, this is merely an example, and the bitmap may include a bit corresponding to the PCH. In this case, information indicating one or more secondary channels that serve as the basis for SCA may be configured with a 4-bit bitmap.

As described above, the first bit of the bitmap may correspond to the 20 MHz channel of the highest frequency and the last bit of the bitmap may correspond to the 20 MHz channel of the lowest frequency. However, this is only an example, and the first bit of the bitmap may correspond to the 20 MHz channel of the lowest frequency and the last bit of the bitmap may correspond to the 20 MHz channel of the highest frequency. In addition, the bandwidth that serves as the basis of the bitmap is not limited to 20 MHz, and may be implemented as 40, 80, or 160 MHz, etc.

Additionally or alternatively, the CCA threshold information related to the secondary channel may include information on a threshold that serves as a criterion for determining the state of the channel through CCA (e.g., a criterion for determining whether the channel state is idle or busy) in one or more SCHs on which SCA is performed. The lower the threshold that serves as a criterion for determining the state of the channel through CCA (i.e., a threshold that is compared with a measurement value of the channel), the higher the likelihood that the state of the channel will be determined as busy even if the measurement value of the channel (e.g., a received signal strength indicator (RSSI)) is low. In this case, the CCA may include a first type CCA or/and a second type CCA.

For example, the threshold value that serves as a criterion for judging the channel status may be determined/set as a fixed/predefined value (e.g., -82 dbM or -72 dbM, etc.). Additionally or alternatively, the threshold value that serves as a criterion for judging the channel status may be determined/set as a value that adds/subtracts a variable value (e.g., 4 dbM, 8 dbM, etc.) to/from the fixed/predefined value. In this case, the AP may transmit to the STA only the value that is added/subtracted from the threshold value.

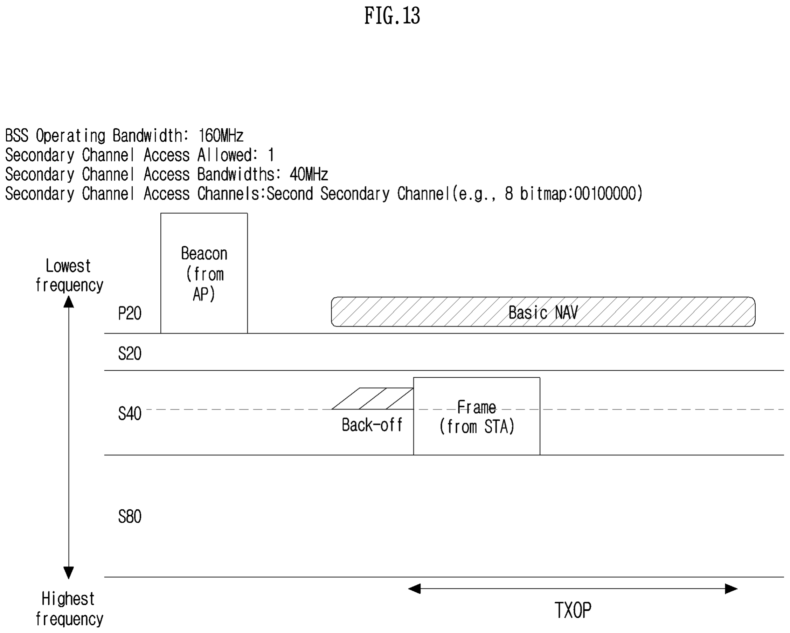

As an example of the present disclosure, FIG. 13 illustrates a procedure for performing SCA based on SCA-related information announced by an AP. As illustrated in FIG. 13, the AP may announce to the STA information on a BSS operating bandwidth set to 160 MHz, information indicating that SCA is allowed, information on the maximum bandwidth of a PPDU that can be transmitted through SCA set to 40 MHz, and information on a secondary channel (i.e., a channel on which backoff is performed) that serves as a reference for SCA. The AP may transmit/announce the above-described information to the STA through a beacon frame.

Here, information about the channel on which backoff is performed can be configured in bitmap format. For example, as illustrated in FIG. 13, if information about the channel on which backoff is performed is set to an 8-bit bitmap (e.g., "00100000"), this can indicate that the first 20 MHz of S40 (i.e., the second SCH) is the channel on which backoff is performed. Here, it is assumed that the first bit of the bitmap corresponds to the 20 MHz channel with the lowest frequency and the last bit of the bitmap corresponds to the 20 MHz channel with the highest frequency (i.e., in ascending order).

If information related to SCA is announced from the AP, the STA may perform backoff based on the announced information based on the first SCH of S40. If the backoff count becomes 0 and the second SCH of S40 is IDLE, the STA may transmit a frame (to another STA (e.g., AP)) on S40. In addition, even if the channel state of S80 is IDLE, since the maximum bandwidth of a PPDU that can be transmitted through SCA is 40 MHz, the STA may not perform CCA on a specific SCH of S80 and may not use it.

Through the example described above, the STA can transmit a frame using the SCH even if the state of the PCH is busy, thereby increasing the efficiency of channel use.

### Embodiment 5

Embodiment 5 relates to an operation related to SCA of STA.

In one embodiment of the present disclosure, during the time when the NAV is set in the PCH, the STA may transmit a frame/PPDU on the SCH by performing SCA. For example, the STA may identify/determine a channel state of one or more SCHs based on a backoff performed on one or more SCHs and a CCA result of one or more SCHs on which the backoff is not performed. If the channel state of one or more SCHs is idle, the STA may transmit a frame/PPDU with the PCH excluded/punctured on the one or more SCHs (to another STA (e.g., AP)).

Additionally or alternatively, a TXOP set according to an SCA performed on one or more SCHs (i.e., a backoff performed on one or more SCHs, etc.) may be set to end before the NAV on the PCH ends. That is, the end time of a TXOP that starts with a frame/PPDU transmission on the SCH may be set/determined before the NAV on the PCH ends.

Here, the length of the TXOP set on the SCH can be set/indicated through the duration/ID field of the frame transmitted in the corresponding TXOP. For example, the value of the duration/ID field can be set to a value corresponding to the time required for the exchange of a frame/PPDU following the corresponding frame/PPDU (including the interframe interval (IFS)).

Additionally or alternatively, the STA may obtain information about one or more SCHs performing backoff, such as through a management frame (e.g., a beacon frame) transmitted from the AP. At this time, the information about the one or more SCHs may include information about whether frame/PPDU transmission is possible on one or more SCHs. For example, if the STA performing SCA is an AP, the STA may utilize the information transmitted by the STA (e.g., information about whether frame/PPDU transmission is possible on the SCH and/or information about one or more SCHs performing backoff, etc.).

Additionally or alternatively, the STA may obtain information on the maximum bandwidth over which it can transmit frames/PPDUs on the SCH from the AP through a management frame (e.g., a beacon frame). If the STA performing SCA is an AP, the STA may utilize the information on the maximum bandwidth over which it can transmit frames/PPDUs on the SCH it transmitted.

Additionally or alternatively, the STA may obtain a threshold for the first type of CCA or the second type of CCA for determining the state of the channel (i.e., whether the channel is busy or idle) on the SCH through a management frame (e.g., a beacon frame, etc.). That is, if a value measured by the STA on the SCH (e.g., RSSI or power related to the channel) exceeds the threshold, the channel state of the corresponding SCH may be determined to be busy.

Additionally or alternatively, the EDCA parameter set for each SCH on which backoff is performed may be set to the EDCA parameter set in the PCH, the MU EDCA parameter set, or a new EDCA parameter set. The EDCA parameter set may be applied equally or differently to all SCHs.

As an example of the present disclosure, an STA receiving a frame transmitted via SCA may perform frame detection on the SCH even during the time for which a NAV is set in the PCH. For example, the STA may perform a backoff on the SCH for a frame to be transmitted. As another example, when there is no frame to be transmitted, the STA may attempt to receive a frame addressed to itself on the SCA. Furthermore, the STA may perform NAV setting/resetting based on the value of the interval/ID field of the frame detected on the SCH.

Additionally or alternatively, the STA may obtain information about one or more SCHs performing backoff, such as through a management frame (e.g., a beacon frame) transmitted from the AP. At this time, the information about the one or more SCHs may include information about whether frame/PPDU transmission is possible on one or more SCHs. For example, if the STA performing SCA is an AP, the STA may utilize the information transmitted by the STA (e.g., information about whether frame/PPDU transmission is possible on the SCH and/or information about one or more SCHs performing backoff, etc.).

Additionally or alternatively, the STA may obtain a threshold for the first type of CCA or the second type of CCA for determining the state of the channel (i.e., whether the channel is busy or idle) on the SCH through a management frame (e.g., a beacon frame, etc.). That is, if a value measured by the STA on the SCH (e.g., RSSI or power related to the channel) exceeds the threshold, the channel state of the corresponding SCH may be determined to be busy.

Additionally or alternatively, the EDCA parameter set for each SCH on which backoff is performed may be set to the EDCA parameter set in the PCH, the MU EDCA parameter set, or a new EDCA parameter set. The EDCA parameter set may be applied equally or differently to all SCHs.

### Embodiment 5-1

Embodiment 5-1 relates to a method of performing backoff by dividing channels including BSS operating channels into multiple sets for efficient SCA. In this case, in addition to the information announced by the AP for SCA described in Embodiments 4, 4-1, and 5, information described below (e.g., channel subset unit information, SCA channel bitmap size information, etc.) may be additionally announced/transmitted.

As an example of the present disclosure, the AP may announce information about bandwidth criteria (or units) for dividing the bandwidth of the entire BSS operating channel into one or more channel subsets for SCA (i.e., channel subset unit information).

For example, assume that the (sub)field size indicating channel subset unit information is 2 bits. If the (sub)field value indicating channel subset unit information is 0 (i.e., if the (sub)field indicates no subset), this may mean that the BSS operating channel is not divided into one or more subsets. If the (sub)field value is 1, this may mean that the bandwidth reference/unit value for dividing the BSS operating channel into one or more subsets is 40 MHz. If the (sub)field value is 2, this may mean that the bandwidth reference/unit value for dividing the BSS operating channel into one or more subsets is 80 MHz. If the (sub)field value is 3, this may mean that the bandwidth reference/unit value for dividing the BSS operating channel into one or more subsets is 160 MHz.

However, this is only one embodiment, and the (sub)field size indicating channel subset unit information may be set to 3 bits. In this case, the bandwidth reference/unit value may be indicated as 320 MHz through the (sub)field.

Additionally, the AP may notify the STA of the size of a bitmap (i.e., SCA channel bitmap size information) indicating one or more SCHs (i.e., SCHs on which backoff is performed) that serve as a reference when performing SCA.

For example, assume that the (sub)field size indicating SCA channel bitmap size information is 2 bits. If the (sub)field value indicating the SCA channel bitmap size information is 0, this may mean that the SCA channel bitmap size is 4 bits. If the (sub)field value indicating the SCA channel bitmap size information is 1, this may mean that the SCA channel bitmap size is 8 bits. If the (sub)field value indicating the SCA channel bitmap size information is 2, this may mean that the SCA channel bitmap size is 16 bits. If the (sub)field value indicating the SCA channel bitmap size information is 3, this may mean that the SCA channel bitmap size is 32 bits. Here, if P20 is not indicated through the SCA channel bitmap, the SCA channel bitmap size may be reduced by 1.

Here, the (sub)field size indicating the SCA channel bitmap size information may vary depending on the BSS operating channel. For example, if the size of the BSS operating channel is 320 MHz, the SCA channel bitmap size may be set/determined to a maximum of 16 bits.

For example, if information indicating one or more SCHs that serve as a reference when performing SCA is configured as a bitmap, information for configuring/indicating/describes channel subsets may not be required. That is, it may not be necessary to configure a bitmap corresponding to each subset as a separate field. If information indicating one or more SCHs that serve as a reference when performing SCA is configured as a bitmap, if a bit corresponding to a specific channel among the bitmaps is set to 1, it may mean that a backoff is performed on the corresponding channel. Additionally or alternatively, there may not be an SCH for which a backoff is performed within one channel subset.

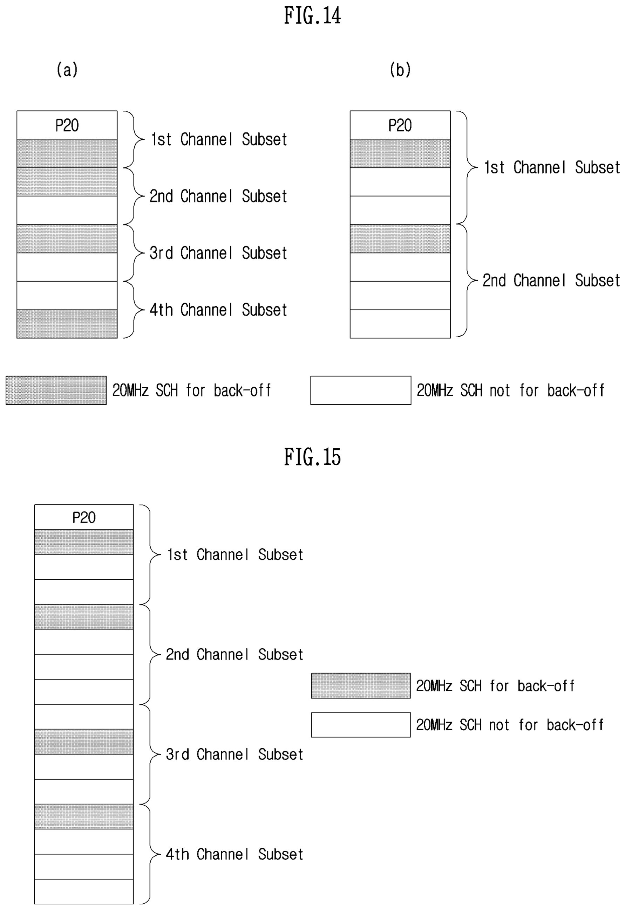

As an example of the present disclosure, FIG. 14 illustrates a case where the bandwidth of a BSS operating channel is 160 MHz. In FIG. 14, the shaded portion, excluding P20, may denote an SCH that serves as a reference for SCA (i.e., an SCH capable of performing backoff).

For example, (a) of Fig. 14 illustrates a case where the channel subset unit is 40 MHz. When information indicating one or more SCHs that serve as references when performing P20 and SCA is configured as a bitmap, the bitmap may be set to "01101001". In this case, when P20 is not indicated through the bitmap, the bitmap may be set to "01101001". In other words, one or more SCHs that serve as references when performing SCA for all channel subsets may be expressed/set through a single bitmap.

For example, (b) of Fig. 14 illustrates a case where the channel subset unit is 80 MHz. If information indicating one or more SCHs that serve as references when performing P20 and SCA is configured as a bitmap, the bitmap may be set to "01001000." In this case, if P20 is not indicated through the bitmap, the bitmap may be set to "1001000." In other words, one or more SCHs that serve as references when performing SCA for all channel subsets may be expressed/set through a single bitmap.

As another example of the present disclosure, FIG. 15 is a diagram for explaining an SCA channel bitmap when the bandwidth of a BSS operating channel is 320 MHz. That is, it is assumed that the bandwidth of the BSS operating channel is 320 MHz and the channel subset unit is 80 MHz. In FIG. 15, the shaded portion, excluding P20, may indicate a channel that serves as a reference for SCA (i.e., an SCH that can perform backoff).

For example, if information indicating one or more SCHs that serve as a reference when performing P20 and SCA is configured as a bitmap, the bitmap may be set to "0100100001001000". Here, if P20 is not indicated through the bitmap, the bitmap may be set to "100100001001000". That is, one or more SCHs that serve as a reference when performing SCA for all channel subsets may be expressed/set through one bitmap. That is, one or more SCHs that serve as a reference when performing SCA for all channel subsets may be expressed/set through one bitmap.

Unlike channel access in existing wireless LAN systems, which is performed based on the state of the primary channel, secondary channel access in various examples of the present disclosure can efficiently perform frame/PPDU transmission/reception on one or more secondary channels even when the primary channel is in a busy state, thereby increasing the utilization of channel resources.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

The method proposed in this disclosure has been described with a focus on examples applied to IEEE 802.11-based systems, but can be applied to various wireless LANs or wireless communication systems in addition to IEEE 802.11-based systems.

## Claims

1. A method performed by a first station (STA) in a wireless local area network (WLAN) system, the method comprising:
receiving, from a second STA, a first frame including information related to channel access for at least one non-primary channel;
performing a first back-off procedure on a first non-primary channel among the at least one non-primary channel based on the first frame; and
transmitting a second frame to the second STA or receiving the second frame from the second STA on at least one channel including the first non-primary channel, based on the first frame and the first back-off procedure.

2. The method of claim 1, wherein:
information related to channel access for the at least one non-primary channel includes at least one of information indicating whether channel access to a non-primary channel is allowed or a maximum bandwidth that can transmit or receive the second frame.

3. The method of claim 2, wherein:
a bandwidth of at least one channel through which the second frame is transmitted or received is set to be less than or equal to the maximum bandwidth.

4. The method of claim 1, wherein:
based on a back-off count value according to the first back-off procedure being 0, whether a state of a second non-primary channel adjacent to the first non-primary channel is idle is determined by the first STA.

5. The method of claim 4, wherein:
based on the state of the second non-primary channel being idle, the at least one channel includes the first non-primary channel and the second non-primary channel.

6. The method of claim 4, wherein:
the information related to channel access for the at least one non-primary channel includes a clear channel assessment (CCA) threshold for determining whether at least one of the first non-primary channel or the second non-primary channel is idle.

7. The method of claim 1, wherein:
information related to channel access for the at least one non-primary channel includes at least one of a bitmap indicating the first non-primary channel on which the first back-off procedure is performed and information indicating a size of the bitmap.

8. The method of claim 7, wherein:
each bit of the bitmap is associated with information indicating whether each channel of an unit bandwidth is a channel on which the first back-off procedure is to be performed, and
an order of each bit of the bitmap is associated with an order of each channel of the unit bandwidth.

9. The method of claim 8, wherein:
a first bit of the bitmap corresponds to a unit bandwidth channel with a highest frequency or a unit bandwidth channel with a lowest frequency, and
an last bit of the bitmap corresponds to the unit bandwidth channel with the lowest frequency or the unit bandwidth channel with the highest frequency.

10. The method of claim 1, wherein:
information related to channel access for at least one non-primary channel includes information on a unit bandwidth for dividing a total bandwidth of a basic service set (BSS) operating channel into one or more subsets.

11. The method of claim 1, wherein:
a transmission opportunity (TXOP) for transmitting or receiving the second frame ends before a time when a network allocation vector (NAV) set on a primary channel expires.

12. The method of claim 11, wherein:
based on a state of the primary channel being busy, the second frame in which the primary channel is punctured is transmitted to the second STA or the second frame is received from the second STA.

13. The method of claim 1, wherein:
the first frame includes a beacon frame or a probe response frame.

14. A first station (STA) device in a wireless local area network (WLAN) system, the first STA comprising:
at least one transceiver; and
at least one processor connected to the at least one transceiver,
wherein the at least one processor is configured to:
receive, from a second STA through the at least one transceiver, a first frame including information related to channel access for at least one non-primary channel;
perform a first back-off procedure on a first non-primary channel among the at least one non-primary channel based on the first frame; and
through the at least one transceiver, transmit a second frame to the second STA or receive the second frame from the second STA on at least one channel including the first non-primary channel, based on the first frame and the first back-off procedure.

15. A method performed by a second station (STA) in a wireless LAN system, the method comprising:
transmitting, to a first STA, a first frame including information related to channel access for at least one non-primary channel; and
based on a first back-off procedure being performed on a first non-primary channel among the at least one non-primary channel based on the first frame, receiving a second frame to the first STA or transmitting the second frame to the first STA on at least one channel including the first non-primary channel,
wherein the first back-off procedure is performed while the primary channel is in a busy state.

16. A second station (STA) performed in a wireless LAN system, the second STA comprising:
at least one transceiver; and
at least one processor connected to the at least one transceiver,
wherein the at least one processor is configured to:
transmit, to a first STA through the at least one transceiver, a first frame including information related to channel access for at least one non-primary channel; and
based on a first back-off procedure being performed on a first non-primary channel among the at least one non-primary channel based on the first frame, through the at least one transceiver, receive a second frame to the first STA or transmit the second frame to the first STA on at least one channel including the first non-primary channel,
wherein the first back-off procedure is performed while the primary channel is in a busy state.

17. A processing device configured to control a first station (STA) in a wireless LAN system, the processing device comprising:
at least one processor; and
at least one computer memory operatively coupled to the at least one processor and storing instructions for performing operations upon being executed by the at least one processor;
the operations include:
receiving, from a second STA, a first frame including information related to channel access for at least one non-primary channel;
performing a first back-off procedure on a first non-primary channel among the at least one non-primary channel based on the first frame; and
transmitting a second frame to the second STA or receiving the second frame from the second STA on at least one channel including the first non-primary channel, based on the first frame and the first back-off procedure.

18. At least one non-transitory computer readable medium storing at least one instruction,
based on the at least one instruction being executed by at least one processor, an apparatus for performing communication in a wireless LAN system controls to:
receive, from a second STA, a first frame including information related to channel access for at least one non-primary channel;
perform a first back-off procedure on a first non-primary channel among the at least one non-primary channel based on the first frame; and
transmit a second frame to the second STA or receive the second frame from the second STA on at least one channel including the first non-primary channel, based on the first frame and the first back-off procedure.
